# EUROPEAN PATENT APPLICATION

(11) **EP 2 921 373 A1**
(43) Date of publication of application: **23.09.2015**
(21) Application number: 14182672.7
(22) Date of filing: 28.08.2014
(51) Int. Cl.: B62D 5/04, F16H 57/021

(54) **Steering device**

(30) Priority: 19.03.2014 JP 2014057101
(71) Applicant: Showa Corporation, Gyoda City Saitama 361-8506 (JP)
(72) Inventor: Watanabe, Naomasa, Tochigi 321-3315 (JP); Sakaida, Shinichi, Tochigi 321-3315 (JP)
(74) Representative: Schulz, Oliver Frank Michael

(57) **Abstract**

A steering device (1) includes a motor (11) ; a steering shaft (59); a belt transmission mechanism (12) including a drive pulley (14), a driven pulley (16) , and a belt (15); a housing (20) that accommodates the belt transmission mechanism; and a pulley holder (21) that holds the motor (11) and is attached to the housing (20) so as to rotatably support the drive pulley (14). The pulley holder (21) includes a first supporting portion (21c) that supports a first shaft portion of the drive pulley and a second supporting portion (21f) that supports a second shaft portion of the drive pulley. The steering device further includes a pulley holder supporting portion (33) that supports a portion, of the pulley holder (21), located closer to the second supporting portion (21f) than the center of the pulley portion in relation to the housing.

## Description

### BACKGROUND

### 1. Technical Field

The present invention relates to a steering device.

### 2. Related Art

A steering device that transmits output of a motor to a steering shaft (rack shaft) via a belt is known (for example, see Patent Literature 1 (JP-A-2006-232049)). In such a steering device, the output of the motor is transmitted to the steering shaft via a drive pulley connected to an output shaft of the motor, a belt, a driven pulley, and a ball screw. A pulley holder is connected to the motor. The pulley holder rotatably supports the drive pulley.

### SUMMARY OF INVENTION

When the belt tension is high, load may be applied to the pulley holder via the drive pulley, and the pulley holder may bend due to this load. When the pulley holder bends, the noise generated by the belt or the like may increase. Moreover, when the bending increases, the misalignment of the drive pulley may increase and jumping of the belt may occur.

The present invention has been made to solve such a problem and an object thereof is to provide a steering device capable of suppressing bending of a pulley holder.

An aspect of the present invention provides a steering device including: a motor; a steering shaft; a belt transmission mechanism including a drive pulley connected to the motor, a driven pulley connected to the steering shaft, and a belt wound around the drive pulley and the driven pulley; a housing that accommodates the belt transmission mechanism; and a pulley holder that holds the motor and is attached to the housing, and rotatably supports the drive pulley, in which the drive pulley includes a pulley portion, a first shaft portion connected to an output shaft of the motor, and a second shaft portion formed on an opposite side of the first shaft portion across the pulley portion, the pulley holder includes a first supporting portion that supports the first shaft portion and a second supporting portion that supports the second shaft portion, and the steering device further includes a pulley holder supporting portion that supports a portion, of the pulley holder, located closer to the second supporting portion than a center of the pulley portion in relation to the housing.

According to the steering device of the aspect of the present invention, even when the tension of the belt increases and the load that displaces the drive pulley toward the driven pulley increases, since the pulley holder supporting portion supports the periphery of the second supporting portion of the pulley holder, bending of the pulley holder is suppressed, and the drive pulley is held at a proper position.

The pulley holder supporting portion may be formed in a cap that is attached to the housing.

The pulley holder supporting portion may be configured such that a position thereof is changed in a direction of connecting a shaft center of the drive pulley and a shaft center of the driven pulley.

The pulley holder supporting portion may be formed in the housing.

The pulley holder supporting portion may support a range of portion facing the driven pulley.

With any of the configurations of the steering apparatus discussed above, it is possible to suppress an increase in the noise generated by the belt or the like and to prevent the occurrence of jumping of the belt due to misalignment of the drive pulley.

### BRIEF DESCRIPTION OF DRAWINGS

FIG. 1 is a schematic diagram of a steering device according to a first embodiment;
FIG. 2 is a cross-sectional view for describing the surroundings of an auxiliary torque mechanism according to the first embodiment;
FIG. 3 is an enlarged view of a main part of FIG. 2;
FIG. 4 is a cross-sectional view along arrow A-A of FIG. 3;
FIG. 5 is a cross-sectional view for describing the surroundings of an auxiliary torque mechanism according to a second embodiment;
FIG. 6 is a cross-sectional view along arrow B-B in FIG. 5; and
FIG. 7 is a cross-sectional view for describing the surroundings of an auxiliary torque mechanism according to a third embodiment.

### DESCRIPTION OF EMBODIMENTS

First to third embodiments of a steering device according to the present invention will be described with reference to the drawings. In the first to third embodiments, the same constituent elements are denoted by the same reference numerals.

### <First Embodiment>

A steering device 1 is a device that is mounted on a vehicle so as to steer a steered wheel of the vehicle.

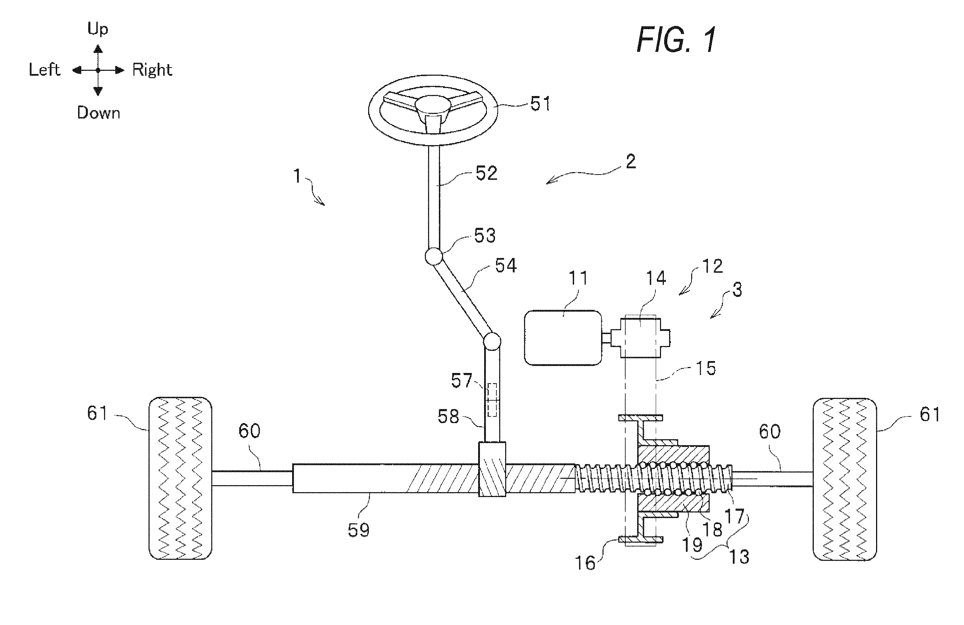

As illustrated in FIG. 1, the steering device 1 is a rack-assisted steering device including a steering mechanism 2 that has a rack shaft (steering shaft) 59 extending in a left-right direction and an auxiliary torque mechanism 3 disposed on one end side of the rack shaft 59.

Hereinafter, in the left-right direction in which the rack shaft 59 extends, one end side on which the auxiliary torque mechanism 3 is disposed will be referred to a right side and the other end side will be referred to as a left side.

The steering mechanism 2 includes a steering wheel 51 that a driver operates, a steering shaft 52 that rotates integrally with the steering wheel 51, an upper connection shaft 54 connected to the steering shaft 52 with a universal joint 53 interposed therebetween, a lower connection shaft 56 connected to the upper connection shaft 54 with a universal joint 55 interposed therebetween, a pinion shaft 58 connected to the lower connection shaft 56 with a torsion bar 57 interposed therebetween and having a pinion in a lower portion thereof, and a rack shaft 59 in which rack teeth engaging with the pinion are formed and left and right front wheels 61 are connected to both ends with a tie rod 60 interposed therebetween. When the driver rotates the steering wheel 51, the rack shaft 59 moves to the left or right side, and the driver can steer the front wheels 61.

The auxiliary torque mechanism 3 includes a motor 11, a belt transmission mechanism 12, and a ball screw 13. The belt transmission mechanism 12 includes a drive pulley 14, a belt 15, and a driven pulley 16. The ball screw 13 includes a screw shaft 17, a ball 18, and a nut 19 which are integrally attached coaxially with the rack shaft 59. The auxiliary torque mechanism 3 is configured such that torque applied to the steering wheel 51 is detected by a torque sensor (not illustrated), and driving of the motor 11 is controlled by a control device (not illustrated) according to the detected torque. In this way, the torque generated by the motor 11 is transmitted to the rack shaft 59 via the belt transmission mechanism 12 and the ball screw 13 as auxiliary force of operating force of the driver applied to the steering wheel 51.

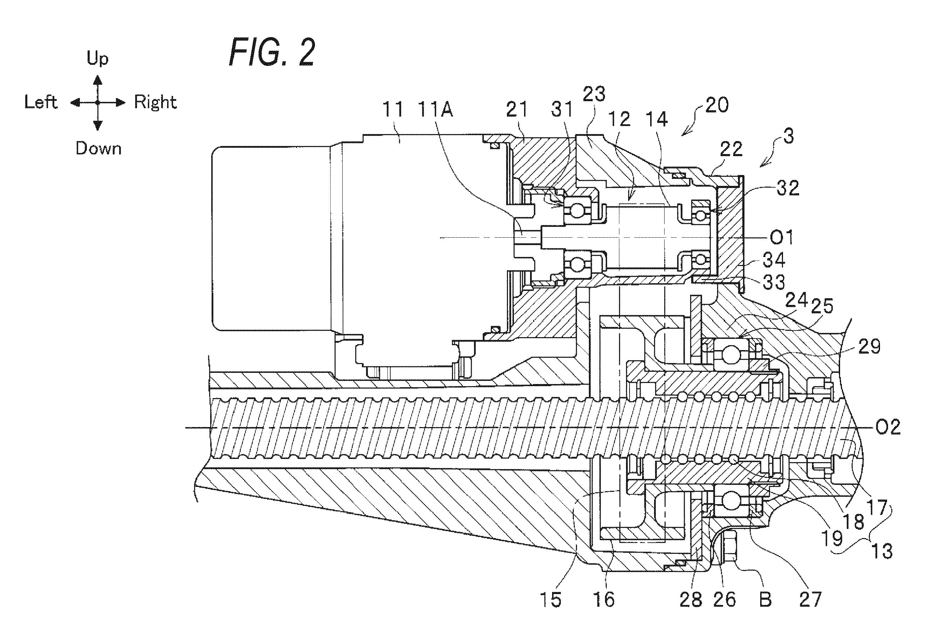

Hereinafter, the auxiliary torque mechanism 3 of the steering device 1 will be described in detail with reference to FIG. 2.

The auxiliary torque mechanism 3 includes the motor 11, the rack shaft 59 (FIG. 1), the belt transmission mechanism 12, the ball screw 13, a housing 20 that accommodates the belt transmission mechanism 12, and a pulley holder 21 that holds the motor 11 and is attached to the housing 20 to rotatably support the drive pulley 14.

The housing 20 is divided into a gear case 22 and a gear housing 23 that are integrated by bolts B. The gear case 22 has an annular peripheral wall portion 24 that surrounds the periphery of the inserted rack shaft 59, and an outer ring of a first bearing 25 is internally fitted to the peripheral wall portion 24. The outer ring of the first bearing 25 is clamped by annular spacers 26 and 27 from the left-right direction, and a fixing ring 28 is in contact with the left side of the spacer 26. Thus, the first bearing 25 is restricted in relation to the gear case 22 so as not to be displaced in the left-right direction. The inner ring of the first bearing 25 is externally fitted to a nut 19 of the ball screw 13. A fixing nut 29 that screws with the right end portion of the nut 19 is in contact with the right side of the inner ring of the first bearing 25. Due to this, the nut 19 is restricted in relation to the first bearing 25 so as not to be displaced in the left-right direction. The driven pulley 16 is externally fitted and fixed to the nut 19.

### (Pulley Holder 21)

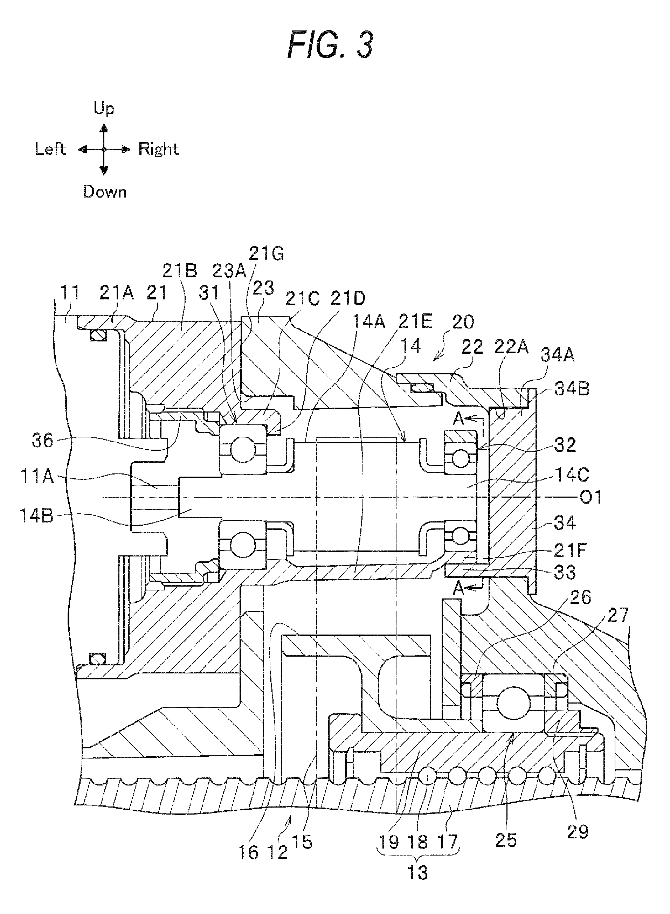

In FIG. 3, the pulley holder 21 includes the following components in that order from the left side: a cylindrical motor holding portion 21 A; a cylindrical housing attachment portion 21B having an outer diameter slightly smaller than the outer diameter of the motor holding portion 21A; a cylindrical first supporting portion 21C having an outer diameter smaller than the outer diameter of the housing attachment portion 21B; an annular bearing restricting portion 21D extending inward in the radial direction from the inner circumference of the first supporting portion 21C; an extension portion 21 E that passes between a pair of paths of the belt 15 that is wound around the drive pulley 14 and the driven pulley 16; and a cylindrical second supporting portion 21F having an outer diameter smaller than the outer diameter of the first supporting portion 21C. The pulley holder 21 is molded from a metal material, for example, and the respective portions 21A to 21F are integrally molded.

An opening 23A is formed in an upper side wall of the gear housing 23. The pulley holder 21 has the first supporting portion 21C, the bearing restricting portion 21D, the extension portion 21E, and the second supporting portion 21F which are disposed inside the gear case 22 and the gear housing 23 through the opening 23A. An annular end surface 21G formed on the right side of the housing attachment portion 21B is attached to an upper left side surface around the opening 23A of the gear housing 23 and is fixed to the gear housing 23 by bolts (not illustrated).

The motor holding portion 21A is externally fitted to the outer circumference of the motor 11 to thereby hold the motor 11. The drive pulley 14 includes a pulley portion 14A around which the belt 15 is wound, a first shaft portion 14B connected to an output shaft 11A of the motor 11, and a second shaft portion 14C formed on the opposite side of the first shaft portion 14B across the pulley portion 14A. The pulley holder 21 is configured such that the first supporting portion 21C supports the first shaft portion 14B with a second bearing 31 interposed therebetween, and the second supporting portion 21F supports the second shaft portion 14C with a third bearing 32 interposed therebetween. In this way, the pulley holder 21 supports the drive pulley 14 so as to be rotatable about a shaft center O1 that is parallel to a shaft center 02 (FIG. 2) of the driven pulley 16. The second bearing 31 has an outer ring which is clamped by the bearing restricting portion 21D and a pressing member 36 so that the second bearing 31 is restricted so as not to be displaced in the left-right direction. The pressing member 36 is a member that is attached to an inner circumference of the housing attachment portion 21 B by screwing or the like.

Due to this, when the output shaft 11A rotates with the driving of the motor 11, the drive pulley 14 rotates, the rotating force of the drive pulley 14 is transmitted to the driven pulley 16 by the belt 15, and the driven pulley 16 rotates. Moreover, when the nut 19 rotates together with the driven pulley 16, the screw shaft 17 moves toward the left or right side, whereby movement of the rack shaft 59 (FIG. 1) in the left-right direction is assisted.

As can be understood from the structure of the pulley holder 21, the second supporting portion 21F is formed at the right end of the extension portion 21 E that passes between the pair of paths of the belt 15. That is, the second supporting portion 21F is positioned distant from the portion attached to the housing 20, and the drive pulley 14 is supported by the pulley holder 21 in a so-called cantilevered manner. Thus, when the tension of the belt 15 increases and the load that displaces the drive pulley 14 downward increases, it becomes difficult to support the second supporting portion 21F with the strength of the extension portion 21E only, and the periphery of the second supporting portion 21F may tilt downward.

### (Pulley Holder Supporting Portion 33)

In order to solve this problem, the steering device of the present invention includes the pulley holder supporting portion 33 that supports a portion, of the pulley holder 21, located closer to the second supporting portion 21F than the center of the pulley portion 14A in relation to the housing 20. The "portion, of the pulley holder 21, located closer to the second supporting portion 21F than the center of the pulley portion 14A" means a portion, of the pulley holder 21, located closer to the second supporting portion 21F than a central position in the width direction (the direction along the shaft center 01) of the pulley portion 14A. The pulley holder supporting portion 33 of the present embodiment is formed by integral molding in a cap 34 that is attached to the housing 10 (the gear case 22).

A circular opening 22A is formed in an upper side wall of the gear case 22. The cap 34 is molded from a metal material such as an iron-based alloy, for example. The cap 34 has such a shape that includes a columnar insertion portion 34A that is inserted into the opening 22A by press-fitting or the like and a flange portion 34B that extends outward in the radial direction from the outer circumference at the right end of the insertion portion 34A to make contact with an upper right side surface of the gear case 22. The shaft center of the cap 34 when attached to the gear case 22 is identical to the shaft center O1.

The pulley holder supporting portion 33 protrudes toward the left side so as to support the second supporting portion 21F from the left end surface of the insertion portion 34A. The cap 34 is fixed to the gear case 22 whereby the pulley holder supporting portion 33 is integrated with the housing 20. Thus, the pulley holder supporting portion 33 supports the second supporting portion 21F in relation to the housing 20. A method of attaching the cap 34 to the gear case 22 is not limited to a press-fitting method, and a screw-clamping method or the like may be used, for example.

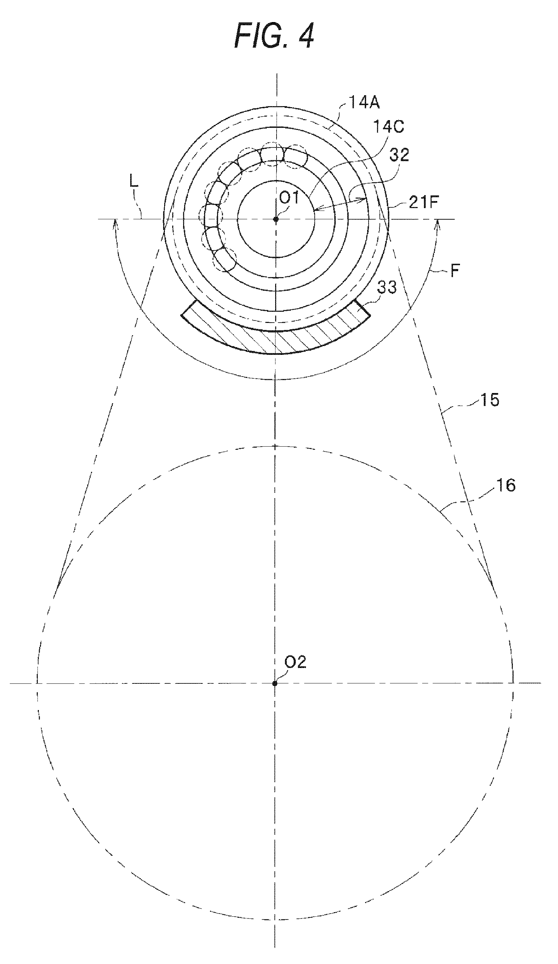

As illustrated in FIG. 4, the pulley holder supporting portion 33 when seen from the shaft center 01 has such a circular arc shape that has an inner circumference having the same radius of curvature as the outer circumference of the second supporting portion 21F around the shaft center O1, for example. Thus, in this case, the second supporting portion 21F is supported by the pulley holder supporting portion 33 in a surface-contacting manner. Here, in order to suppress the downward displacement of the supporting portion 21F, it is not necessary to support an entire portion of the second supporting portion 21F corresponding to an angular range of 360° around the shaft center O1. That is, the pulley holder supporting portion 33 may support a portion of the second supporting portion 21F only corresponding to a range F facing the driven pulley 16 among the portions of the second supporting portion 21F formed in an angular range of 360° around the shaft center 01 as can be understood from FIG 4. The "portion corresponding to the range F facing the driven pulley 16" is a range of portion extending to the driven pulley 16 from a line L orthogonal to a line connecting the shaft centers O1 and O2 when seen from the shaft center 01.

### (Effects)

When the tension of the belt 15 increases and the load that displaces the drive pulley 14 downward increases, the pulley holder supporting portion 33 integrated with the housing 20 supports the portion of the supporting portion 21F of the pulley holder 21 corresponding to the range F. Due to this, the downward bending of the pulley holder 21 is suppressed, and the drive pulley 14 is held at a proper position.

As described above, since the steering device 1 includes the pulley holder supporting portion 33 that supports a portion, of the pulley holder 21, located closer to the second supporting portion 21F than the center of the pulley portion 14A in relation to the housing 20, it is possible to suppress bending of the pulley holder 21. Thus, it is possible to suppress an increase in the nose generated by the belt 15 or the like and to prevent the occurrence of jumping of the belt 15 due to misalignment of the drive pulley 14.

Hereinabove, a rack-assisted steering device has been described as an example of the steering device 1 according to the first embodiment. However, the present invention can be applied to a so-called steer-by-wire steering device in which a reaction force actuator that gives an operational feeling to a driver when operating the steering wheel is electrically connected to a steering actuator having a motor that drives a steering shaft, including second and third embodiment described later.

### <Second Embodiment>

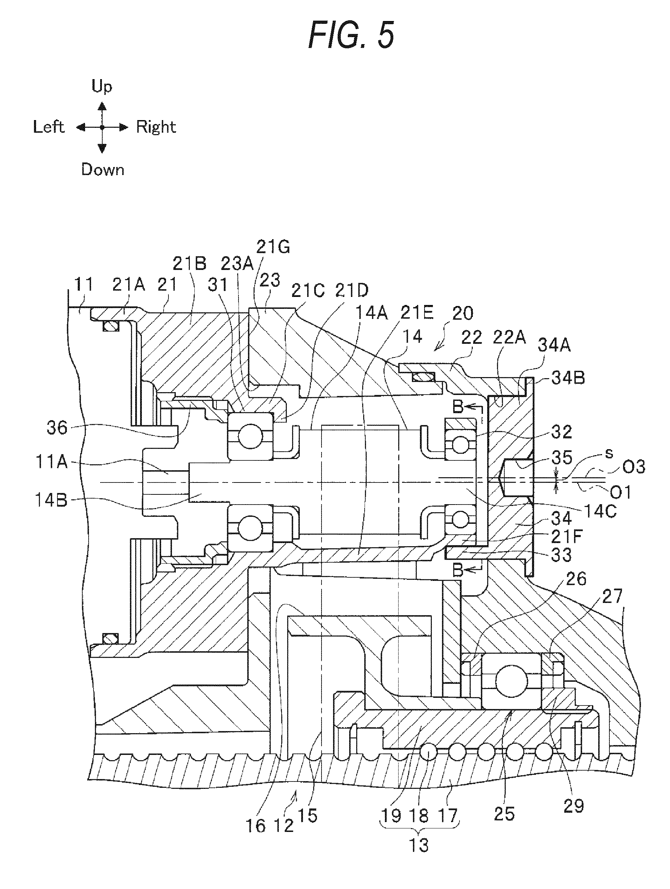

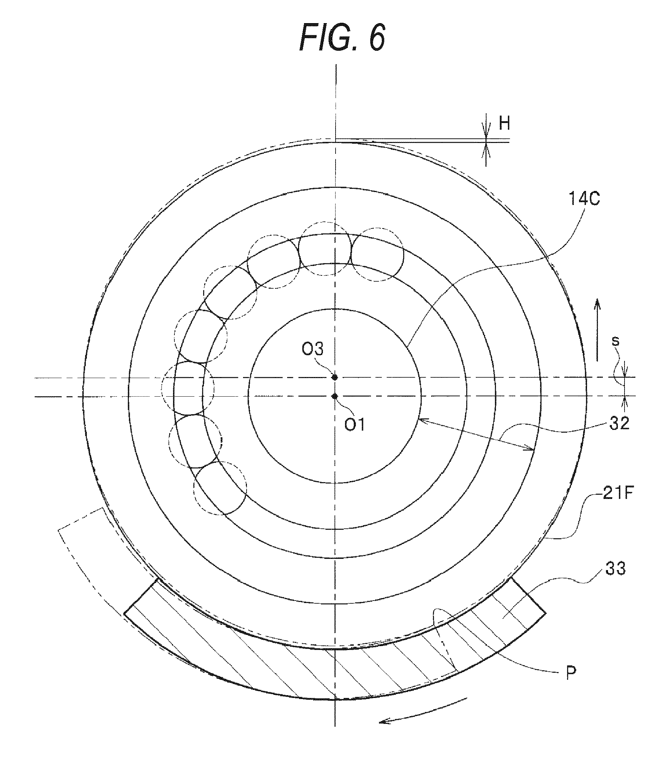

A second embodiment will be described with reference to FIGS. 5 and 6. The present embodiment relates to a configuration in which the position of the pulley holder supporting portion 33 in a direction of connecting the shaft center 01 of the drive pulley 14 and the shaft center 02 of the driven pulley 16 is changed according to an attachment phase angle of the cap 34.

In FIG. 5, the circular opening 22A formed in the upper side wall of the gear case 22 has a shaft center 03 that is shifted by a distance s in relation to the shaft center 01 of the drive pulley 14. Thus, the shaft center of the cap 34 attached to the opening 22A is the shaft center 03. The pulley holder supporting portion 33 having a circular arc shape similarly to the first embodiment is formed in the cap 34. The pulley holder supporting portion 33 has such a circular arc shape that has an inner circumference having the same radius of curvature as the outer circumference of the second supporting portion 21F around the shaft center 01, for example. A hexagonal hole 35 for inserting a tool therein is formed in the surface of the cap 34 so that the cap 34 can be attached to the opening 22A while changing the phase angle about the shaft center 03.

### (Effects)

The pulley holder supporting portion 33 depicted by a solid line in FIG. 6 illustrates a case where the pulley holder supporting portion is positioned at the lowest position. In contrast, when a tool is inserted in the hexagonal hole illustrated in FIG. 5 to attach the cap 34 to the opening 22A of the gear case 22 while changing the phase angle about the shaft center 03, the pulley holder supporting portion 33 rotates about the shaft center O1 as indicated by an imaginary line in FIG. 6. In this way, the position of the pulley holder supporting portion 33 in the direction of connecting the shaft centers 01 and 02 (FIG. 5) changes, and the second supporting portion 21F is supported by the pulley holder supporting portion 33 at point P. As a result, the second supporting portion 21F is displaced upward by a distance H as indicated by an imaginary line.

As in the present embodiment, when the pulley holder supporting portion 33 is configured such that the position thereof is changed according to the attachment phase angle of the cap 34, it is possible to finely adjust the position of the pulley holder supporting portion 33 with a simple structure when the bending of the pulley holder 21 is suppressed by the pulley holder supporting portion 33.

The shaft center 03 may be located at a lower position than the shaft center 01.

Moreover, when the position of the pulley holder supporting portion 33 is changed according to the attachment phase angle of the cap 34, the shape of the pulley holder supporting portion 33 is not limited to such a circular arc shape that has an inner circumference having the same radius of curvature as the outer circumference of the second supporting portion 21F around the shaft center O1. That is, the contact position of the pulley holder supporting portion 33 with the periphery of the second supporting portion 21F of the pulley holder 21 may be changed in the direction of connecting the shaft centers O1 and O2 (FIG. 5) according to the attachment phase angle of the cap 34. The pulley holder supporting portion 33 may have a circular arc shape having a radius of curvature different from that of the outer circumference of the second supporting portion 21F, and the pulley holder supporting portion 33 may be formed of a linear plate member.

### <Third Embodiment>

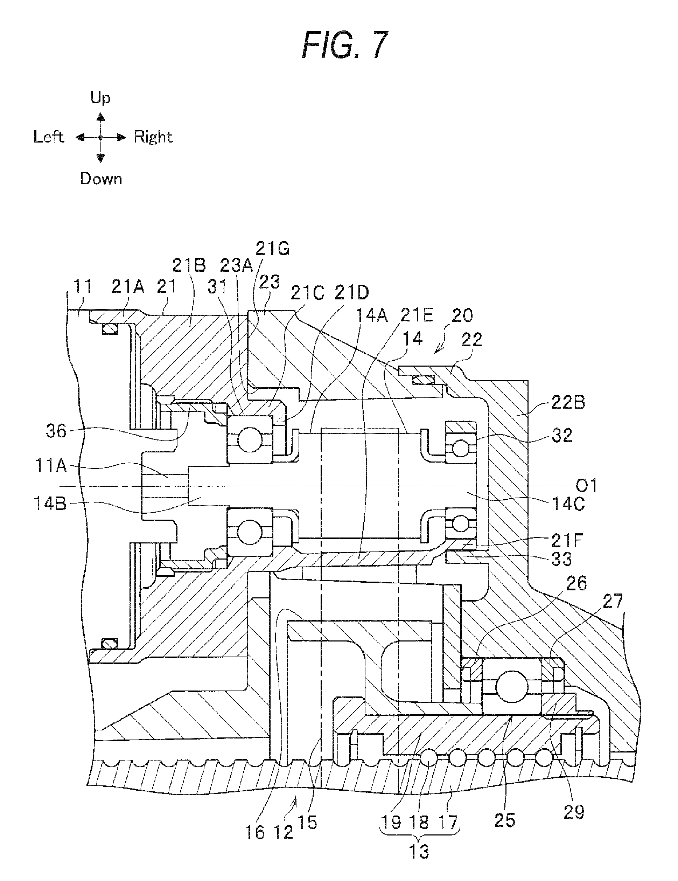

A third embodiment will be described with reference to FIG. 7. The present embodiment has a configuration in which the pulley holder supporting portion 33 is formed in the gear case 22 (the housing 20). The pulley holder supporting portion 33 is formed integrally with the gear case 22 so as to protrude from the inner wall surface of the upper side wall 22B of the gear case 22. The pulley holder supporting portion 33 supports the second supporting portion 21F.

In the present embodiment, it is also possible to suppress the bending of the pulley holder 21 with the pulley holder supporting portion 33. Thus, it is possible to suppress an increase in the nose generated by the belt 15 or the like and to prevent the occurrence of jumping of the belt 15 due to misalignment of the drive pulley 14.

## Claims

1. A steering device comprising:
a motor;
a steering shaft;
a belt transmission mechanism including a drive pulley connected to the motor, a driven pulley connected to the steering shaft, and a belt wound around the drive pulley and the driven pulley;
a housing that accommodates the belt transmission mechanism;
a pulley holder that holds the motor and is attached to the housing, and rotatably supports the drive pulley,
the drive pulley including a pulley portion, a first shaft portion connected to an output shaft of the motor, and a second shaft portion formed on an opposite side of the first shaft portion across the pulley portion,
the pulley holder including a first supporting portion that supports the first shaft portion and a second supporting portion that supports the second shaft portion, and
the steering device further comprising a pulley holder supporting portion that supports a portion, of the pulley holder, located closer to the second supporting portion than a center of the pulley portion in relation to the housing.

2. The steering device according to claim 1, wherein
the pulley holder supporting portion is formed in a cap that is attached to the housing.

3. The steering device according to claim 2, wherein
the pulley holder supporting portion is configured such that a position thereof is changed in a direction of connecting a shaft center of the drive pulley and a shaft center of the driven pulley.

4. The steering device according to claim 1, wherein
the pulley holder supporting portion is formed in the housing.

5. The steering device according to any one of claims 1 to 4, wherein
the pulley holder supporting portion supports a range of portion facing the driven pulley.
